# EUROPÄISCHE PATENTANMELDUNG

(11) **EP 1 757 396 A1**
(43) Veröffentlichungstag der Anmeldung: **28.02.2007**
(21) Anmeldenummer: 06008425.8
(22) Anmeldetag: 24.04.2006
(51) Int. Cl.: B23K 1/00, B23K 1/20, B23K 35/02, B23K 35/36, H01R 4/02, B23K 101/32, B23K 101/36

(54) **Als hohlzylindrische Hülse ausgebildetes Lot sowie Verfahren zu dessen Anbringung**

(30) Priorität: 27.08.2005 DE 102005040819
(71) Anmelder: FEW Fahrzeugelektrikwerk GmbH & Co. KG, 04442 Zwenkau (DE)
(72) Erfinder: Gilliam, Jakob, 83402 Seeshaupt (DE); Jenrich, André, 04158 Leipzig (DE)
(74) Vertreter: Säger, Manfred

(57) **Zusammenfassung**

Ein lötbares Lot ist dadurch gekennzeichnet, dass es zum Aufstecken auf die Enden von zu verlötenden elektrischen Anschlüssen sowie von Kabeln als hohlzylindrische Hülse ausgebildet ist.

## Beschreibung

Die Erfindung betrifft ein gattungsgemässes Lot sowie ein Verfahren zu dessen Anbringung unter Bewirkung einer elektrisch leitenden Verbindung an einem elektrischen Anschluss oder an oder mit elektrischen Kabeln.

Ein solches Lot ist seit langem bekannt, ebenso wie dessen Anbringung an elektrischen Anschlüssen, wie an Lötfahnen oder dgl. oder an elektrischen Kabeln. Es ist hierbei sowohl deren Verzinnen als auch das Anlöten einer dritten elektrischen Leitung möglich.

Nachteilig hierbei ist, dass man bislang in aller Regel das Lot manuell als Band von einer Rolle mit einer Hand zuführen und mit der anderen Hand das Lötgerät, z. B. den Lötkolben betätigen muss, was aufwändig ist. Ausserdem besteht die Gefahr, dass trotz Aufschmelzen des Lots bei zu kurzer Lötzeit und infolgedessen zu kleiner Wärmeabgabe durch das Lötgerät eine sogenannte kalte Lötstelle mit nicht vorhandener elektrischer Verbindung entsteht; der Lötvorgang ist damit von der Erfahrung und dem Geschick des Bearbeiters abhängig und damit nicht hinreichend genau.

Der Erfindung liegt deshalb die Aufgabe zugrunde, ein Lot sowie ein Verfahren vorzuschlagen, das weniger aufwändig durchzuführen und von dem Geschick des Bearbeiter unabhängig ist.

Diese Aufgabe wird bei einem gattungsgemässen Lot sowie einem gattungsgemässen Verfahren zu dessen Anbringung nach dem jeweiligen Oberbegriff des Sachsowie Verfahrenshauptanspruchs erfindungsgemäss durch dessen kennzeichnende Merkmale also zum einen dadurch, dass es zum Aufstecken auf die Enden von zu verlötenden elektrischen Anschlüssen sowie von Kabeln als hohlzylindrische Hülse ausgebildet ist, zum anderen dadurch gelöst, dass zunächst die hohlzylindrische Hülse auf den elektrischen Anschluss aufgesetzt oder auf das elektrische Kabel aufgesteckt wird und dann die Hülse bis wenigstens zu deren Aufschmelzen erwärmt wird.

Erfindungsgemäss wird also das Lot in Form einer Hülse auf den elektrischen Anschluss, z. B. Lötfahne oder auf das Ende eines elektrischen Kabels aufgesteckt und erforderlichenfalls in dieser Lage z.B. mittels eines Werkzeuges verformt, z.B. festgekrimpt. Danach kann der Bearbeiter bei nicht- oder nur teilautomatisierten LÖtungen seine ganze Aufmerksamkeit dem eigentlichen LÖtvorgang widmen, der dann weniger aufwändig durchzuführen ist. Mit besonderem Vorteil ist das zur Hülse geformte Lot sowie das Verfahren zu dessen Anbringung bei Lötanschlüssen für den automotiven Einsatz von Glasscheiben, insbesondere Glasscheiben von Kraftfahrzeugen geeignet.

In vorteilhafter Weiterbildung der Erfindung weist die Hülse auf ihrer Oberfläche eine Beschichtung und einen diese bei einer bestimmten vorgebbaren Temperatur einen Wechsel des optischen Eindrucks bewirkenden, z. B. einen Farbumschlag zeigenden optischen Indikator auf. Hierdurch bedingt ist es bei richtiger Festlegung von dessen Temperatur beim Wechsel des optischen Eindrucks möglich, den Lötvorgang von der Erfahrung und dem Geschick des Bearbeiters unabhängig und somit hinreichend genauer durchzuführen, so dass damit nicht nur manuelle, sondern auch nicht- oder nur teilautomatisierte Lötungen durch den visuellen Nachweis bei erreichter Löttemperatur möglich sind.

Weitere zweckmässige Ausgestaltungen und Weiterbildungen sind in den Unteransprüchen gekennzeichnet.

## Patentansprüche

1. Lötbares Lot, **dadurch gekennzeichnet, dass** es zum Aufstecken auf die Enden von zu verlötenden elektrischen Anschlüssen sowie von Kabeln als hohlzylinderförmige Hülse ausgebildet ist.

2. Lot nach Anspruch 1, **dadurch gekennzeichnet, dass** die elektrischen Anschlüsse sowie elektrischen Kabel Kupfer aufweisen.

3. Lot nach Anspruch 1 oder 2, **dadurch gekennzeichnet, dass** die Hülse auf ihrer Oberfläche eine Beschichtung aufweist.

4. Lot nach Anspruch 3, **dadurch gekennzeichnet, dass** die Beschichtung ein Flussmittel aufweist.

5. Lot nach Anspruch 4, **dadurch gekennzeichnet, dass** das Flussmittel in erstarrtem Zustand nach kurzem Anschmelzen, also als Glasur aufgebracht ist.

6. Lot nach Anspruch 3, **dadurch gekennzeichnet, dass** die Beschichtung einen bei einer bestimmten vorgebbaren Temperatur einen Farbumschlag zeigenden optischen Indikator aufweist.

7. Lot nach Anspruch 6, **dadurch gekennzeichnet, dass** die Glasur den optische Indikator aufweist.

8. Lot nach Anspruch 6 oder 7, **dadurch gekennzeichnet, dass** der optische Indikator einen thermisch zersetzbaren Farbstoff aufweist.

9. Lot nach einem der Ansprüche 1 bis 8, **dadurch gekennzeichnet, dass** die hohlzylindrische Hülse aus einem formstabilen, aber verformbaren Lot besteht.

10. Lot nach Anspruch 9, **dadurch gekennzeichnet, dass** die hohlzylindrische Hülse Lötzinn aufweist.

11. Verfahren zur Anbringen des Lots unter Bewirkung einer elektrisch leitenden Verbindung an einem elektrischen Anschluss oder an oder mit elektrischen Kabeln, **dadurch gekennzeichnet**,

12. Verfahren nach Anspruch 11, **dadurch gekennzeichnet, dass** nach dem Aufsetzen oder Aufstecken und vor dem Erwärmen der Hülse diese zur Erzielung eines vorübergehenden form- und/oder reibungsschlüssigen Haltes an dem elektrischen Anschluss oder an dem elektrischen Kabel verformt wird.
